# FASCICULE DE BREVET EUROPEEN

(11) **EP 0 687 683 B1**
(45) Date de publication et mention de la délivrance du brevet: **22.03.2000**
(21) Numéro de dépôt: 95401304.1
(22) Date de dépôt: 06.06.1995
(51) Int. Cl.: C07F 17/02

(54) **Procédé de synthèse d'halogénoalkylferrocènes**
Verfahren zur Synthese von Halogenalkylferrocenen
Process for the synthesis of haloalkylferrocenes

(30) Priorité: 14.06.1994 FR 9407223
(43) Date de publication de la demande: 20.12.1995
(73) Titulaire: SOCIETE NATIONALE DES POUDRES ET EXPLOSIFS, F-75181 Paris Cédex 04 (FR)
(72) Inventeur: Graindorge, Hervé, F-91710 Vert Le Petit (FR); Mondet, Jean-Claude, F-91810 Vert le Grand (FR); Vincent, Charles-Henry, F-60460 Precy sur Oise (FR)
(74) Mandataire: Pech, Bernard

(56) Documents cités:
- FR-A- 2 567 895
- FR-A- 2 667 318
- FR-A- 2 667 600
- CHEMICAL ABSTRACTS, vol. 120, no. 3, 17 Janvier 1994, Columbus, Ohio, US; abstract no. 030877, KOZHICH D T ET AL 'Synthesis of.omega.-ferrocenylalkyl derivatives with functional groups in the.alpha.-position. Mild reduction of acylferrocenes in the sodium borohydride/boron trifluoride etherate/THF system' & METALLOORG. KHIM. (MEKHEX,02350114);93; VOL.6 (2); PP.207-12, INST. BIOORG. KHIM.;MINSK; BELARUS (BY)
- MONATSHEFTE FUR CHEMIE, vol.92, no.4, 1961, WIEN AT pages 921 - 926 K. SCHLÖGL 'Darstellung von Alkylferrocenen aus Acylferrocenen durch Reduktion mit Lithiumalanat-Aluminiumchlorid'
- CHEMICAL ABSTRACTS, vol. 081, no. 3, 22 Juillet 1974, Columbus, Ohio, US; abstract no. 013631, ELECKO P ET AL 'Synthesis, proton magnetic resonance spectra, and biological activity of haloacylferrocenes' & CHEM. ZVESTI (CHZVAN);74; VOL.28 (1); PP.94-9, KOMENSKY UNIV.;FAC. NAT. SCI.; BRATISLAVA; CZECH.

## Description

La présente invention est relative à un nouveau procédé de synthèse d'halogénoalkylferrocènes.

Les halogénoalkylferrocènes sont notamment utiles comme intermédiaires de synthèse de catalyseurs ferrocéniques de combustion pour propergols, tels que les polymères à insaturations éthyléniques comportant des groupements silylferrocéniques décrits dans le brevet français FR 2 567 895. Les greffons silylferrocéniques de ces polymères sont en général obtenus par réaction du magnésien des halogénoalkylferrocènes précités avec un dialkylhalogénosilane, et l'obtention de greffons silylferrocéniques avec un rendement et une pureté élevés est essentielle pour obtenir finalement, avec un coût non prohibitif, un polymère silylferrocénique de qualité satisfaisante pour son utilisation dans les propergols.

Ces contraintes rendent nécessaire l'obtention d'halogénoalkylferrocènes de pureté élevée, avec un rendement élevé, selon un procédé le plus simple et le moins coûteux possible.

Il est connu d'obtenir les halogénoalkylferrocènes à partir du ferrocène en deux étapes réactionnelles.

La première étape réactionnelle consiste à synthétiser un composé halogénoalcanoylferrocène par réaction de type "Friedel-Crafts", en présence de chlorure d'aluminium comme catalyseur et en milieu solvant organique, par réaction du ferrocène avec un halogénure ou un anhydride d'acide carboxylique. Cet intermédiaire halogénoalcanoylferrocène est isolé du milieu réactionnel puis purifié.

La seconde étape réactionnelle consiste à réduire, par voie chimique ou par hydrogénation catalytique, le dérivé halogénoalcanoylferrocène précité en dérivé halogénoalkylferrocène correspondant. La difficulté majeure consiste à réduire la fonction cétone sans réduire la fonction halogène.

De façon générale, cette voie d'accès aux halogénoalkylferrocènes selon les deux étapes réactionnelles précitées est très limitée, notamment du fait de difficultés importantes, et des coûts que cela entraîne, pour purifier les produits bruts obtenus à l'issue de chacune de ces deux étapes.

Ces purifications sont nécessaires du fait de la présence, en quantité relativement importante, de ferrocène et de di(halogénoalcanoyl)-1,1' ferrocène comme impuretés dans l'halogénoalcanoylferrocène brut intermédiaire. En effet, d'une part, le ferrocène résiduel a tendance à se sublimer puis à se déposer sur toutes les parois froides (pièges, canalisations...) au cours des étapes ultérieures, et d'autre part la présence de di(halogénoalcanoyl)-1,1' ferrocène conduit à des polymères ferrocéniques de mauvaise qualité du fait de sa difonctionnalité qui entraîne une réticulation inopportune.

Le Document "Chem. Zvesti, vol 28(1) p. 94-99, Bratislava, Czech décrit un procédé de synthèse d'halogénoacylferrocènes, comportant une première étape d'acylation par réaction de Friedel-Crafts entre le ferrocène et un halogénure d'acyle. Ensuite, on effectue une réduction à l'aide d'hydrure de lithium et d'aluminium pour obtenir l'halogénoalkylferrocène correspondant.

Le brevet français FR 2 667 318 décrit un procédé de synthèse de monohalogénoalkylferrocènes par hydrogénation catalytique dans l'acide acétique de monohalogénoalcanoylferrocènes. Le catalyseur est à base de PtO₂. On obtient ainsi un produit brut de synthèse de pureté en général voisine de 95%, ne nécessitant notamment pas de purification ultérieure pour son utilisation comme intermédiaire de synthèse de catalyseurs ferrocéniques de combustion pour propergols. Toutefois, pour qu'il en soit ainsi, il est nécessaire, comme le montrent les exemples, d'utiliser un halogénoalcanoylferrocène de départ recristallisé et donc très pur. De plus, il s'avère en pratique qu'une pureté de 95% est limite pour l'utilisation précitée et qu'il est préférable d'utiliser un halogénoalkylferrocène de pureté voisine de 98%. Par ailleurs, le catalyseur à base de platine est assez coûteux et l'hydrogénation sous pression nécessite un matériel spécifique relativement onéreux.

Le brevet français FR 2 667 600 décrit l'obtention d'un dérivé halogénoalcanoylferrocène brut de synthèse, selon la méthode "Friedel-Crafts" précitée, ayant une pureté en général voisine de 95%, par combinaison de conditions opératoires bien précises, notamment en ce qui concerne la température, la concentration et la quantité des réactifs. Le produit brut ainsi obtenu n'est toutefois pas suffisamment pur pour être utilisé directement, sans purification, dans le procédé précité décrit dans le brevet français FR 2 667 318. Une telle utilisation conduirait en effet à un dérivé halogénoalkylferrocène brut de pureté nettement inférieure à 95%, inutilisable tel quel sans purification préalable, pour mettre en oeuvre les étapes ultérieures.

Le brevet français FR 2 667 600 mentionne bien que l'addition d'un sel céreux permet d'obtenir un produit brut de pureté supérieure à 95%, mais cette addition n'a pratiquement pas d'influence sur la teneur en dérivé di(halogénoalcanoyl)-1,1' ferrocène qui reste trop élevée.

L'homme du métier sait par ailleurs qu'on peut réduire les cétones ferrocéniques, notamment l'acétylferrocène, en alkylferrocènes correspondants, par voie chimique, par exemple par le couple NaBH₄/AlCl₃ ou par le couple AlLiH₄/AlCl₃ comme décrit par K. SCHLÖGL, A. MOHAR et M. PETERLIK dans Monatsch. Chem., 1961, n° 92 pp 921-926. L'homme de métier sait toutefois aussi que ces méthodes ne sont pas sélectives et qu'elles permettent également de réduire les dérivés halogénoalkyles en alcanes correspondants, comme décrit par exemple par J. MARCH, dans Advanced Organic Chemistry, Réactions, Méchanisms, and Structure, Second édition, 1977, pages 399-401, ce qui le dissuade de les utiliser pour la réduction sélective de la fonction cétone d'un halogénoalcanoylferrocène.

La présente invention propose une solution aux problèmes précités. Elle a pour objet un procédé simple et peu onéreux d'obtention d'halogénoalkylferrocènes, mis en oeuvre à partir de ferrocène ou d'un alkylferrocène et d'un halogénure ou d'un anhydride d'acide carboxylique, en deux étapes réactionnelles réalisées successivement dans le même milieu (procédé dit "one pot"), la première étape étant une réaction de type "Friedel-Crafts" et la seconde une étape de réduction par un hydrure métallique, directement rajouté dans le milieu réactionnel à l'issue de la première étape, sans aucun traitement préalable du milieu réactionnel, notamment sans hydrolyse du milieu, sans aucune purification ni isolement de composé intermédiaire comme cela était le cas auparavant, alors que toutes les opérations unitaires correspondantes (hydrolyse, extractions avec décantations délicates, évaporations, recristallisations...) sont longues et coûteuses.

Cette façon d'opérer, particulièrement intéressante au stade industriel du fait de sa simplicité et de son faible coût, permet également une amélioration du rendement du fait qu'on n'isole pas le dérivé intermédiaire halogénoalcanoylferrocène, qui est peu stable et qui se dégrade au cours du temps, d'autant plus rapidement qu'il est impur.

Cette façon d'opérer est particulièrement surprenante pour plusieurs raisons. Tout d'abord, dans un procédé multiétapes, l'homme du métier considère comme important de maîtriser la pureté dès la première étape. Or, selon l'invention, on ne purifie ni isole l'intermédiaire halogénoalcanoylferrocène.

Par ailleurs, seul le choix d'un hydrure métallique comme agent réducteur permet d'obtenir ce résultat, et, de façon inattendue, il n'est pas nécessaire de rajouter avec l'hydrure un activateur de cet hydrure, comme AlCl₃ OU BF₃, pour mettre en oeuvre la seconde étape de réduction, alors que la quasi-totalité du chlorure d'aluminium mis en oeuvre au cours de la première étape a été consommée par la réaction de type "Friedel-Crafts".

De plus, l'homme du métier ne constate pas, dans ces conditions, et contrairement à ce que l'état de la technique laissait supposer, de réduction importante de la fonction halogénure.

Il est possible, sans que la Demanderesse soit liée par cette hypothèse, que selon l'invention, du fait de l'absence d'hydrolyse avant la seconde étape de réduction, ce ne soit pas le dérivé halogénoalcanoylferrocène qui est réduit, mais son complexe avec AlCl₃, résultat de la réaction de "Friedel-Crafts".

Cette différence fondamentale au niveau des réactions mises en oeuvre pourrait être en partie à l'origine des observations inattendues précitées, mais il n'est néanmoins pas possible, même avec un raisonnement à posteriori reposant sur cette hypothèse, de les expliquer de façon satisfaisante.

La présente invention a plus précisément pour objet un nouveau procédé de synthèse d'halogénoalkylferrocènes, ledit procédé comprenant une première étape réactionnelle de type "Friedel-Crafts", mise en oeuvre en présence de chlorure d'aluminium comme catalyseur et en milieu solvant organique, consistant à faire réagir un halogénure ou un anhydride d'acide carboxylique avec un dérivé ferrocénique choisi dans le groupe constitué par le ferrocène et les alkylferrocènes. Ce nouveau procédé est caractérisé en ce que, après cette première étape réactionnelle, sans isoler au préalable de composé intermédiaire, et sans aucun traitement préalable du milieu réactionnel, notamment d'hydrolyse, on ajoute un hydrure métallique dans le milieu réactionnel.

De façon préférée, les halogénoalkylferrocènes répondent à la formule générale (I) 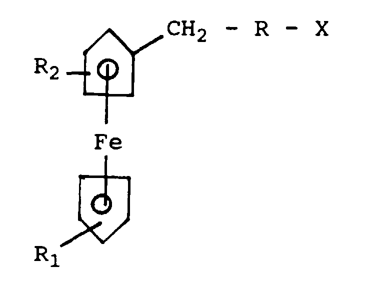 dans laquelle
. R représente une chaîne alkyle comportant 1 à 47 atomes de carbone, de préférence 1 à 23 atomes de carbone, mieux encore 1 à 17, 1 à 11 ou même 1 à 7 et 2 à 7 atomes de carbone. De façon particulièrement préférée, R représente CH₂ ou un groupement polyméthylène (CH₂)ₙ dans lequel n est un nombre entier tel que 2 ≤n≤7.
. R₁ et R₂, identiques ou différents, représentent l'hydrogène ou une chaîne alkyle comportant 1 à 8 atomes de carbone, de préférence 1 à 4 atomes de carbone. De façon particulièrement préférée, R₁ et R₂ représentent l'hydrogène, ou bien encore R₁ et R₂ représentent le groupement éthyle, ou bien encore R₁ représente le groupement éthyle et R₂ l'hydrogène.
. X représente le chlore ou le brome, de préférence le chlore.

Selon cette variante préférée pour laquelle les halogénoalkylferrocènes répondent à la formule (I) précitée, d'une part le dérivé ferrocénique choisi dans le groupe constitué par le ferrocène et les alkylferrocènes répond à la formule générale (II) 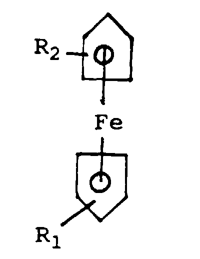 dans laquelle R₁ et R₂ ont la signification précitée, et d'autre part l'acide carboxylique répond à la formule générale (III) X - R - COOH dans laquelle X et R ont la signification précitée.

Selon une variante particulièrement préférée de l'invention, R₁ et R₂ représentent l'hydrogène, X représente le chlore et n est égal à 3, c'est à dire que l'halogénoalkylferrocène obtenu est le chloro-4-butylferrocène.

La première étape réactionnelle de type "Friedel-Crafts" du procédé selon l'invention est bien connue de l'homme du métier.

On utilise, de façon préférée, comme réactif, un chlorure d'acide carboxylique, et, comme solvant, CH₂Cl₂. Les autres solvants habituellement utilisés pour ce type de réaction conviennent également.

On peut citer par exemple les solvants chlorés tels le dichloroéthane et le chloroforme.

Cette première étape réactionnelle est en général mise en oeuvre à une température comprise entre 0°C et 35°C.

Le rapport molaire entre l'halogénure ou l'anhydride d'acide carboxylique et le dérivé ferrocénique choisi dans le groupe constitué par le ferrocène et les alkylferrocènes est de préférence compris entre 1,0 et 1,1 et le rapport molaire entre AlCl₃ et ce même dérivé ferrocénique est compris entre 1,0 et 1,1.

Une variante préférée consiste à réaliser une solution acylante obtenue par mélange dans le solvant organique de l'halogénure ou l'anhydride d'acide carboxylique avec AlCl₃, puis à verser lentement cette solution acylante dans une solution du dérivé ferrocénique.

Cette première réaction terminée, on ajoute un hydrure métallique dans le milieu réactionnel, sans qu'il soit nécessaire de réaliser au préalable un traitement quelconque, physique ou chimique, de ce milieu réactionnel.

Comme exemples d'hydrures métalliques, on peut citer LiAlH₄, NaAlH₄, NaBH₄, B₂H₆, l'hydrure de triphénylétain et LiBH(C₂H₅)₃.

De façon préférée, on utilise un borohydrure, et plus particulièrement NaBH₄.

Selon une variante préférée, l'hydrure métallique est ajouté dans le milieu réactionnel en solution dans un solvant organique, de préférence lentement, par exemple en 1 à 4 heures.

De nombreux solvants organiques conviennent, tels que le triglyme, le diglyme, le tétrahydrofuranne et les alkyléthers. On choisit de préférence un solvant miscible avec le solvant du milieu réactionnel dans lequel la première étape de type "Friedel-Crafts" a été mise en oeuvre.

Le triglyme, de formule 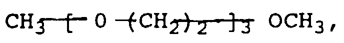 est particulièrement préféré. En effet, de façon inattendue, on a constaté que le ferrocène résiduel était entraîné avec le triglyme au cours de la phase ultérieure d'isolement du produit par distillations successives et qu'il n'y avait ainsi aucun dépôt de ferrocène sur les pièges et canalisations de l'installation. Ce résultat, qui n'est pas observé avec les autres solvants, notamment avec les solvants usuels précités, est particulièrement intéressant. Il permet tout d'abord une distillation ultérieure aisée de l'halogénoalkylferrocène sans qu'il soit nécessaire d'effectuer au préalable une purification par chromatographie sur colonne, mais aussi de minimiser la formation du dérivé disubstitué dont la présence, comme déjà mentionné précédemment, est rédhibitoire dans le polymère ferrocénique final, en jouant sur les rapports de réactifs dans la première étape de type "Friedel-Crafts".

En effet, la présence de ferrocène résiduel ne posant plus problème dans ce cas, on peut augmenter la proportion molaire de ferrocène par rapport à l'halogénure ou l'anhydride d'acide carboxylique, ce qui diminue les risques de formation du dérivé di(halogénoalcanoyl)-1,1'ferrocène.

De plus, on a constaté que NaBH₄ était presque trois fois plus soluble dans le triglyme que dans le diglyme, solvant très utilisé dans l'état de la technique pour mettre en oeuvre les réductions par NaBH₄.

Cela entraîne une réduction importante du volume nécessaire d'un solvant assez onéreux, un gain de temps lors de la phase d'évaporation de ce solvant, et, de plus, le prix du triglyme est actuellement très inférieur à celui du diglyme.

De façon préférée, la deuxième étape de réduction par l'hydrure métallique est mise en oeuvre à une température comprise entre - 10°C et 10°C.

Après cette deuxième étape de réduction, pour isoler du milieu réactionnel le dérivé halogénoalkylferrocène formé et recherché, on peut par exemple procéder tout d'abord à l'hydrolyse du milieu réactionnel. Après décantation, on récupère la phase organique, on chasse par distillation le ou les solvants organiques, éventuellement à pression réduite selon la nature de ces solvants, puis on distille l'halogénoalkylferrocène à pression réduite.

D'autres méthodes d'isolement du produit recherché peuvent être mises en oeuvre, notamment pour des halogénoalkylferrocènes de masse élevée, par exemple des techniques de séparation par chromatographie sur colonne.

Les exemples non limitatifs suivants illustrent l'invention et les avantages qu'elle procure.

### Exemple 1 - Synthèse du chloro-4-butylferrocène

### A) Préparation du complexe AlCl₃/chlorure de chloro-4 butyroyle

Dans un réacteur émail, on introduit 5,4l de CH₂Cl₂ puis 750g d'AlCl₃ (5,62 mol).

On refroidit à température inférieure ou égale à 5°C, puis, sous agitation, on introduit lentement (2h environ) 800g de chlorure de chloro-4-n-butyroyle (5,68 mol), en refroidissant le réacteur de façon à ce que la température ne dépasse pas 5°C. On poursuit l'agitation 1h environ. Le solution acylante obtenue (solution A) est conservée à 5°C.

### B) Préparation d'une solution de NaBH₄ dans le triglyme

Dans un réacteur, on dissout sous agitation 216g de NaBH₄ (5,68 mol) dans 1,5l de triglyme. Au cours de la dissolution, la température s'élève à 35°C environ. On agite 2 à 3h pour parfaire la dissolution, puis on refroidit à 25°C (solution B).

### C) Synthèse du chloro-4-butylferrocène

Dans un réacteur émail, on introduit 2,6l de CH₂Cl₂ puis 1000g (5,37 mol) de ferrocène. On chauffe à reflux puis on distille 0,8 à 1l de CH₂Cl₂, sans dépasser 40°C, de manière à débarrasser le milieu de l'eau pouvant y avoir été apportée par le ferrocène.

Tout en maintenant le reflux par léger chauffage, on coule lentement (8 à 10h) la solution A précédemment préparée du complexe AlCl₃/chlorure de chloro-4-butyroyle.

On laisse ensuite 30min à reflux, puis on refroidit à - 5°C.

On obtient une solution violette dans laquelle on coule progressivement (2 à 3h) la solution B précédemment préparée de NaBH₄ dans le triglyme, tout en maintenant la température inférieure ou égale à - 5°C.

Le milieu réactionnel prend un aspect orangé.

On laisse 1h environ sous agitation, à 0°C.

On hydrolyse ensuite le milieu (6l d'eau) en maintenant sa température inférieure ou égale à 10°C. On laisse décanter puis on prélève la phase organique.

On lave la phase aqueuse par 3 fois 1l de CH₂Cl₂, puis on regroupe toutes les phases organiques, c'est à dire la phase organique issue du milieu réactionnel et les 3 phases organiques de lavage de la phase aqueuse.

On lave ensuite les phases organiques regroupées par 1,5l d'eau saturée en NaCl, puis, à pression atmosphérique, on distille CH₂Cl₂ en chauffant les phases organiques regroupées et lavées jusqu'à 80°C environ dans la masse. On récupère ainsi 7 à 8l de CH₂Cl₂ que l'on peut recycler après séchage sur Na₂SO₄. On extrait ensuite, à 80°C environ et à pression réduite, 100mmHg (1,33 10⁴ Pa) environ, le CH₂Cl₂ résiduel.

On distille ensuite, à pression réduite, 15mmHg (2 10³ Pa) environ, et à une température en haut de colonne de 80-90°C, le triglyme et le ferrocène résiduel qui se trouve être entraîné par le triglyme.

On distille ensuite, à pression encore plus réduite, inférieure à 3mm Hg (4.10² Pa), et à une température comprise entre 147 et 155°C, 1160g de chloro-4-butylferrocène, identifié par analyse élémentaire et par spectrométries RMN du proton et IR. Le rendement est de 78% par rapport au ferrocène de départ.

La pureté du chloro-4-butylferrocène obtenu est supérieure à 99%.

Une analyse par chromatographie en phase gazeuse indique qu'il contient moins de 0,2% en poids de ferrocène, moins de 0,2% en poids de di(chloro-4-butyl)-1,1'ferrocène, moins de 0,1% en poids de butylferrocène, moins de 0,1% en poids d'hydroxy-4-butylferrocène et environ 0,4% en poids de triglyme.

### Exemple 2 - Synthèse du chloro-3-propylferrocène

Le procédé de synthèse est identique à celui de l'exemple 1, excepté l'utilisation de 720g de chlorure de chloro-3-n-propionyle (5,66 mol) au lieu de celle de 800g de chlorure de chloro-4-n-butyroyle.

Le chloro-3-propylferrocène est obtenu par distillation à pression réduite, environ 1mm Hg (1,5 10² Pa), à une température comprise entre 110°C et 112°C.

Le chloro-3-propylferrocène, identifié par spectrométries RMN du proton et IR, est obtenu avec un rendement de 70% par rapport au ferrocène de départ.

L'analyse chromatographique montre que sa pureté est supérieure à 99%.

## Revendications

1. Procédé de synthèse d'halogénoalkylferrocènes, comprenant une première étape de réaction, en présence de chlorure d'aluminium comme catalyseur et en milieu solvant organique, d'un halogénure ou d'un anhydride d'un halogénoalkyl acide carboxylique avec un dérivé ferrocénique choisi dans le groupe constitué par le ferrocène et les alkylferrocènes, caractérisé en ce que, après cette première étape réactionnelle, sans isoler au préalable de composé intermédiaire, on ajoute un hydrure métallique dans le milieu réactionnel.

2. Procédé de synthèse selon la revendication 1, caractérisé en ce que les halogénoalkylferrocènes répondent à la formule générale (I) 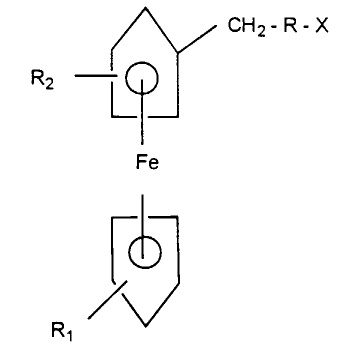 dans laquelle
. R représente une chaîne alkyle comportant 1 à 47 atomes de carbone,
. R₁ et R₂, identiques ou différents, représentent l'hydrogène ou une chaîne alkyle comportant 1 à 8 atomes de carbone,
. X représente le chlore ou le brome,
en ce que le dérivé ferrocénique choisi dans le groupe constitué par le ferrocène et les alkylferrocènes répond à la formule générale (II) 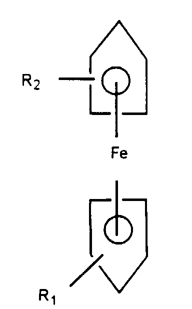 dans laquelle R₁ et R₂ ont la signification précitée, et en ce que l'halogénoalkyl acide carboxylique répond à la formule générale (III) X - R - COOH dans laquelle X et R ont la signification précitée.

3. procédé de synthèse selon la revendication 2, caractérisé en ce que R représente CH₂ ou un groupement polyméthylène (CH₂)ₙ dans lequel n est un nombre entier tel que 2≤n≤7.

4. Procédé de synthèse selon la revendication 3, caractérisé en ce que R₁ et R₂ représentent l'hydrogène, X représente le chlore et n est égal à 3.

5. Procédé de synthèse selon la revendication 1, caractérisé en ce que l'hydrure métallique est un borohydrure.

6. Procédé de synthèse selon la revendication 5, caractérisé en ce que le borohydrure est le borohydrure de sodium.

7. Procédé de synthèse selon la revendication 1, caractérisé en ce que l'hydrure métallique est ajouté dans le milieu réactionnel en solution dans un solvant organique.

8. Procédé de synthèse selon la revendication 7, caractérisé en ce que l'hydrure métallique est en solution dans le triglyme.

9. Procédé de synthèse selon la revendication 1, caractérisé en ce que la première étape est mise en oeuvre en milieu chlorure de méthylène.

10. Procédé de synthèse selon la revendication 1, caractérisé en ce que, après l'addition de l'hydrure métallique, on hydrolyse le milieu réactionnel, on récupère la phase organique, puis en ce qu'on isole l'halogénoalkylferrocène par distillation de la phase organique.

## Claims

1. Method for synthesizing haloalkylferrocenes, comprising a first step of reacting, in the presence of aluminium chloride as a catalyst and in an organic solvent medium, a halide or an anhydride of a haloalkyl carboxylic acid with a ferrocene derivative chosen from the group consisting of ferrocene and alkylferrocenes, characterized in that, after this first reaction step, a metal hydride is added to the reaction medium without first isolating the intermediate compound.

2. Synthetic method according to claim 1, characterized in that the haloalkylferrocenes correspond to the general formula (I) 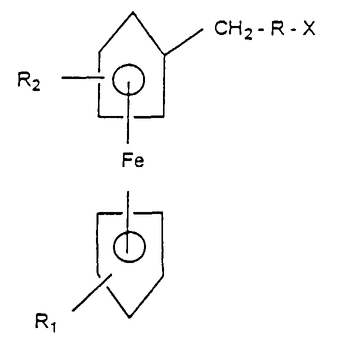 in which
. R represents an alkyl chain having 1 to 47 carbon atoms,
. R₁ and R₂, identical or different, represent hydrogen or an alkyl chain having 1 to 8 carbon atoms,
. X represents chlorine or bromine,
in that the ferrocene derivative chosen from the group consisting of ferrocene and alkylferrocenes corresponds to the general formula (II) 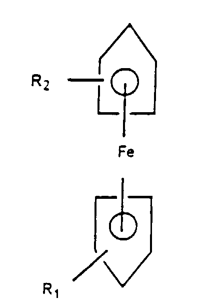 in which R₁ and R₂ have the aforementioned meaning and in that the haloalkyl carboxylic acid corresponds to the general formula (III) X - R - COOH in which X and R have the aforementioned meaning.

3. Synthetic method according to claim 2, characterized in that R represents CH₂ or a polymethylene group (CH₂)ₙ in which n is an integer such that 2≤n≤7.

4. Synthetic method according to claim 3, characterized in that R₁ and R₂ represent hydrogen, X represents chlorine and n is equal to 3.

5. Synthetic method according to claim 1, characterized in that the metal hydride is a borohydride.

6. Synthetic method according to claim 5, characterized in that the borohydride is sodium borohydride.

7. Synthetic method according to claim 1, characterized in that the metal hydride is added to the reaction medium dissolved in an organic solvent.

8. Synthetic method according to claim 7, characterized in that the metal hydride is dissolved in triglyme.

9. Synthetic method according to claim 1, characterized in that the first step is carried out in a methylene chloride medium.

10. Synthetic method according to claim 1, characterized in that, after adding the metal hydride, the reaction medium is hydrolysed, the organic phase is recovered, and the haloalkylferrocene is then isolated from the organic phase by distillation.

## Patentansprüche

1. Verfahren zur Herstellung von Halogenalkylferrocenen, das einen ersten Reaktionsschritt in Gegenwart von Aluminiumchlorid als Katalysator in einem organischen Lösungsmittelmedium umfaßt, in dem ein Halogenid oder ein Anhydrid einer Halogenalkylcarbonsäure mit einem Ferrocenderivat umgesetzt wird, das unter Ferrocen und Alkylferrocenen ausgewählt wird,
dadurch gekennzeichnet, daß
nach diesem ersten Reaktionsschritt und ohne vorherige Isolierung eines Zwischenprodukts ein Metallhydrid zu dem Reaktionsmedium gegeben wird.

2. Herstellungsverfahren nach Anspruch 1, dadurch gekennzeichnet, daß die Halogenalkylferrocene die allgemeine Formel (I) 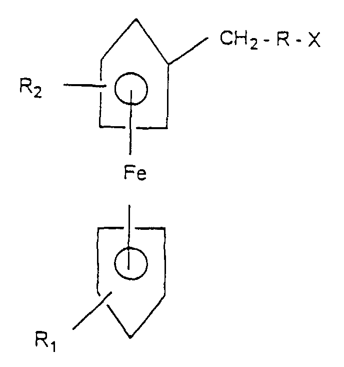 aufweisen, in der bedeuten:
- R eine Alkylkette mit 1 bis 47 Kohlenstoffatomen,
- R₁ und R₂, die gleich oder verschieden sind, Wasserstoff oder eine Alkylkette mit 1 bis 8 Kohlenstoffatomen,
- X Chlor oder Brom,
und daß das Ferrocenderivat ausgewählt wird unter Ferrocen und den Alkylferrocenen der allgemeinen Formel (II) 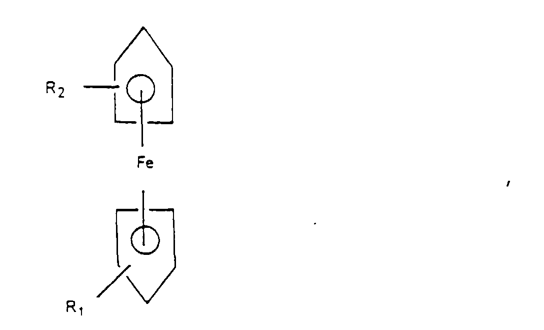 in der R₁ und R₂ die weiter oben angegebene Bedeutung haben, und daß die Halogenalkylcarbonsäure die allgemeine Formel (III) X-R-COOH aufweist, in der X und R die weiter oben angegebene Bedeutung haben.

3. Herstellungsverfahren nach Anspruch 2, dadurch gekennzeichnet, daß es sich bei R um CH₂ oder eine Polymethylengruppe (CH₂)ₙ handelt, worin n eine ganze Zahl, wie z.B. 2 ≤ n ≤ 7, bedeutet.

4. Herstellungsverfahren nach Anspruch 3, dadurch gekennzeichnet, daß R₁ und R₂ Wasserstoff bedeuten, X Chlor darstellt und n gleich 3 ist.

5. Herstellungsverfahren nach Anspruch 1, dadurch gekennzeichnet, daß das Metallhydrid ein Borhydrid ist.

6. Herstellungsverfahren nach Anspruch 5, dadurch gekennzeichnet, daß es sich bei dem Borhydrid um Natriumborhydrid handelt.

7. Herstellungsverfahren nach Anspruch 1, dadurch gekennzeichnet, daß das Metallhydrid gelöst in einem organischen Lösungsmittel zu dem Reaktionsmedium gegeben wird.

8. Herstellungsverfahren nach Anspruch 7, dadurch gekennzeichnet, daß das Metallhydrid in Triglyme gelöst ist.

9. Herstellungsverfahren nach Anspruch 1, dadurch gekenn-. zeichnet, daß der erste Reaktionsschritt in Methylenchloridmedium durchgeführt wird.

10. Herstellungsverfahren nach Anspruch 1, dadurch gekennzeichnet, daß nach der Zugabe des Metallhydrids das Reaktionsmedium hydrolysiert wird, wonach die organische Phase gewonnen wird und schließlich das Halogenalkylferrocen durch Destillation der organischen Phase isoliert wird.
